# EUROPÄISCHE PATENTSCHRIFT

(11) **EP 2 101 383 B1**
(45) Veröffentlichungstag und Bekanntmachung des Hinweises auf die Patenterteilung: **12.05.2010**
(21) Anmeldenummer: 08004514.9
(22) Anmeldetag: 12.03.2008
(51) Int. Cl.: H02G 3/22

(54) **Leitungsdurchführung durch eine Wandöffnung**
Cable duct through an opening in a wall
Passage de lignes à travers une ouverture de mur

(43) Veröffentlichungstag der Anmeldung: 16.09.2009
(73) Patentinhaber: Hauff-Technik GmbH & Co. KG, 89542 Herbrechtingen (DE)
(72) Erfinder: Kurz, Ralf, 89537 Giengen (DE); Egritepe, Senol, 89520 Heidenheim (DE)
(74) Vertreter: Szynka, Dirk

(56) Entgegenhaltungen:
- EP-A- 1 705 769
- WO-A-99/56368
- WO-A-2004/075366
- WO-A-2005/057749
- DE-A1- 4 310 117
- DE-A1-102005 060 013
- DE-B3-102005 011 286

## Beschreibung

Die Erfindung betrifft eine Leitungsdurchführung durch eine Öffnung in einer Wand.

Leitungsdurchführungen dienen der Befestigung und Abdichtung von Leitungen, die durch eine Öffnung in einer Wand geführt sind. Konventionell weist eine Leitungsdurchführung einen Elastomerkörper zur Aufnahme der Leitung auf. Dieser Elastomerkörper wird mit einer Spannvorrichtung verpresst und dichtet die Leitung innerhalb der Wandöffnung.

Die DE 43 10 117 A1 zeigt den nächstliegenden Stand der Technik, und zwar eine Durchführung mit einer Spannvorrichtung mit einem Verschluss, bei der Kabel zwischen Lagen eines kompressiblen Materials mit der Spannvorrichtung senkrecht zur Durchführungsrichtung verpresst werden.

Die WO 2005/057749 A1 beschreibt eine Leitungsdurchführung mit einem Rahmen, in dem zumindest ein Dichtmodul für zumindest ein Kabel oder ein Rohr mit einer Expansionseinheit senkrecht zur Durchführungsrichtung verpresst wird und so gegen die an das Modul grenzenden Flächen dichtet.

Die WO 99/56368 zeigt eine wetterfest dichtende Durchführung ohne Spannvorrichtung mit einer Vielzahl aneinander befestigter Module, wobei mindestens eines einen Durchgang für ein Kabel bereitstellt.

Dieser Erfindung liegt das Problem zugrunde, die Gebrauchseigenschaften einer Leitungsdurchführung zu verbessern.

Die Erfindung löst das Problem mit einer Leitungsdurchführung zum dichtenden Verschließen einer Öffnung in einer Wand mit einem Elastomerkörper zum Aufnehmen einer Leitung und einer Spannvorrichtung zum Spannen des Elastomerkörpers und Dichten der Leitung mit einem Verschluss zum Öffnen der Spannvorrichtung für das Einlegen oder Entnehmen der Leitung und Wiederverschließen, die in geschlossenem Zustand den Elastomerkörper senkrecht zur Durchführungsrichtung umschließt, dadurch gekennzeichnet, dass die Spannvorrichtung den Elastomerkörper in Durchführungsrichtung spannt.

Ferner richtet sich die Erfindung auf ein Verfahren zum Aufbauen eines dichtenden Verschlusses einer Wandöffnung für eine Leitung mit dieser Leitungsdurchführung, bei dem die Leitungsdurchführung, die die Leitung aufnimmt, mit dem Verschluss der Spannvorrichtung geöffnet wird, um außerhalb der Wandöffnung die Leitung in den Elastomerkörper einzulegen und die Leitungsdurchführung mit dem Verschluss wieder verschlossen wird, um sie an der Leitung zu fixieren und dann die Leitungsdurchführung in die Wandöffnung eingesetzt wird.

Weiterhin richtet sich die Erfindung auf die entsprechende Verwendung einer Leitungsdurchführung zum Abdichten einer Leitung durch eine Öffnung in einer Wand.

Bevorzugte Ausgestaltungen der verschiedenen Aspekte der Erfindung sind in den abhängigen Ansprüchen angegeben und ergeben sich des Weiteren aus der folgenden Beschreibung. Dabei wird nicht im Einzelnen zwischen Verfahrens-, Verwendungs- und Vorrichtungsmerkmalen der Erfindung unterschieden, sodass die folgende Offenbarung im Hinblick auf alle diese Kategorien zu verstehen ist.

Durch den Verschluss ermöglicht die Erfindung, die Spannvorrichtung von der Leitungsdurchführung abzunehmen, beispielsweise um diese zu prüfen, zu reparieren oder zu ersetzen, ohne dass hierzu der Elastomerkörper von der Leitung entfernt werden oder sogar die Leitung aus der Wandöffnung herausgenommen werden müsste. Umgekehrt lässt sich die Leitungsdurchführung mit dem Verschluss an einer Leitung vorfixieren, bevor sie in die Wandöffnung eingebaut wird. Damit kann die Arbeit erleichtert werden, etwa wenn die Wandöffnung schlecht zugänglich ist oder auch wenn eine Mehrzahl Leitungsdurchführungen oder eine Leitungsdurchführung mit mehrteiligem Aufbau verwendet werden.

Bei geschlitzten oder infolge Mehrteiligkeit abnehmbaren Elastomerkörpern ist die Leitungsdurchführung zudem zum Dichten einer bereits in der Wand- bzw. Durchlassöffnung verlegten Leitung nutzbar.

Mit der Spannvorrichtung wird der Elastomerkörper In Durchführungsrichtung verpresst, um ihn senkrecht zu dieser Richtung auszudehnen, sodass er insbesondere die eingeschlossene Leitung abdichtet. Bevorzugt weist die Spannvorrichtung dazu Auflageflächen auf den beidseitigen Stirnseiten des Elastomerkörpers in Durchführungsrichtung auf, die die Spannkraft in Durchführungsrichtung übertragen. Vorzugsweise umranden diese Auflageflächen die Stirnseiten für eine gleichmäßige Kraftübertragung vollständig.

Ferner wird die Spannvorrichtung im verschlossenen Zustand durch das Umschließen des Elastomerkörpers an diesem befestigt und kann ihn dabei zusammenhalten, wenn er geschlitzt oder mehrteilig ist. Die Spannvorrichtung umfasst hierzu den Elastomerkörper quasi wie ein Band an seinem Umfang senkrecht zur Durchführungsrichtung, bedeckt diese Umfangsfläche jedoch nicht vollständig, um die Ausdehnung des Elastomerkörpers senkrecht zur Durchführungsrichtung zu gewährleisten.

Die Spannvorrichtung kann zum Umschließen einen ersten Schenkel auf der Umfangsfläche und zum Verpressen je einen zweiten Schenkel auf den Stirnseiten des Elastomerkörpers aufweisen. Damit weisen Elastomerkörper und Spannvorrichtung ein Profil auf, das durch Formschluss der beiden ein Herausziehen des Elastomerkörpers bei geschlossener Spannvorrichtung in Durchführungsrichtung aus der Leitungsdurchführung verhindert, etwa bei Zug auf der Leitung.

Die Funktion einer Leitungsdurchführung liegt, wie schon eingangs erwähnt, in der Separation zweier auf entgegengesetzten Seiten der Wand angrenzender Bereiche innerhalb einer Öffnung. Eine Wand im Sinne der Erfindung ist also eine dichte Begrenzung eines Bereichs, wobei Innen- oder Außenwände beispielsweise von Gebäuden, von Luft-, Wasser-, Raum- oder Landfahrzeugen, von Maschinen oder technischen Anlagen bevorzugt sind und dabei die Leitungsdurchführung vorzugsweise gegen Flüssigkeiten und/oder Gase dichtet.

Die Leitung ist vorzugsweise eine Strom-, Gas-, Wasser-, Wärme-, Telekommunikations- oder anderweitige Signal- oder Datenleitung. Die Leitung kann starr oder flexibel sein.

Die Wandöffnung, in die die Leitungsdurchführung eingesetzt wird, kann über eine geeignete Laibung verfügen, gegen die die Leitungsdurchführung dichten kann, beispielsweise eine Bohrung durch eine Beton- oder Stahlwand. Im Sinne der Erfindung kann die Wandöffnung aber auch mit einem zusätzlichen Rahmen versehen sein, der vorzugsweise teilweise oder ganz in die Öffnung eingelassen ist, aber auch vor dieser auf der Wand aufgesetzt sein kann. Die Erfindung ist also gleichermaßen zum dichten Verschließen unmittelbar in der Wandöffnung, als auch in einer Durchlassöffnung eines zusätzlichen Rahmens ausgelegt.

Dieser Rahmen kann im Übrigen ein- wie mehrteilig, geschlossen oder öffenbar und gegebenenfalls mit einer zusätzlichen Dichtung mit der Wand entweder fest oder mit einer Befestigungsvorrichtung lösbar verbunden sein, beispielsweise geschraubt, geschweißt oder verklebt. Ferner ist denkbar, dass der Rahmen durch die Verspannung des aufgenommenen Systems zusätzlichen Halt in der Wandöffnung erfährt oder auch nur dadurch durch Kraft- oder Formschluss befestigt wird. Insbesondere kommen feste geschlossene Metallrahmen in Betracht.

Eine bevorzugte Ausführung des Verschlusses weist einen Spannbolzen, bevorzugt eine Schraube, auf, der das Öffnen der Spannvorrichtung ermöglicht und diese zum Spannen wieder verschließen kann. Beim Öffnen der Spannvorrichtung wird bevorzugt ein weiterer Spannbolzen zum Spannen in Durchführungsrichtung, vorzugsweise eine Schraube, als Gelenkachse zum Aufklappen der Spannvorrichtung senkrecht zur Durchführungsrichtung für das Einlegen oder Entnehmen einer Leitung verwendet. Als Material der Spannvorrichtung wird für die Übertragung der Spannkräfte ein Metall oder ein glasfaserverstärkter Kunststoff bevorzugt.

Die Spannvorrichtung bedeckt, wie erwähnt, die Umfangfläche des Elastomerkörpers in Richtungen senkrecht zur Durchführungsrichtung nicht vollständig. Wird der Elastomerkörper mit der Spannvörrichtung in Durchführungsrichtung verpresst, dehnt er sich in dazu senkrechte Richtungen aus, sodass diese außen liegende Fläche des Elastomerkörpers nach außen gedrückt wird. Vorzugsweise weist sie eine Dichtfläche auf, die auf dem Umfang der Leitungsführung senkrecht zur Durchführungsrichtung zumindest in gespanntem Zustand der Spannvorrichtung außen liegt. Diese außen liegende Elastomerkörperdichtfläche dient dann zum Dichten gegen die Wand- bzw. Durchlassöffnung und befestigt zusätzlich die Leitungsdurchführung in der Öffnung durch die entstehende Verpressung aufgrund ihrer Ausdehnung.

Bei einer bevorzugten Ausführung der Leitungsdurchführung ist der Elastomerkörper mehrteilig, besteht also aus physisch getrennten Teilen, wobei ein Teil der Aufnahme der Leitung dient und ein weiterer Teil die außen liegende Elastomerkörperdichtfläche aufweist. Insbesondere letzterer kanne ersteren rahmenartig umfassen. Insbesondere ersterer kann seinerseits mehrteilig sein.

Vorzugsweise ist der Elastomerkörper bzw. Elastomerkörperteil zur Aufnahme der Leitung in Durchführungsrichtung so eingeschlitzt, dass die Leitung durch den Schlitz in den Elastomerkörper eingelegt werden kann und dort von diesem umschlossen ist.

Dabei ist der Elastomerkörper durch den Schlitz nur so weit aufgetrennt, dass er beim Öffnen für das Einlegen der Leitung zusammenhängend bleibt. Damit kann er einerseits um die Leitung gelegt werden, sodass die Leitungsdurchführung an einer Leitung, die bereits durch die Wand- bzw. Durchlassöffnung verlegt ist, montierbar ist. Andererseits ist dies einfacher zu bewerkstelligen als beispielsweise mit zwei getrennten um die Leitung zu legenden Teilen, die dabei zusammengehalten werden müssen.

Der Elastomerkörper bzw. Elastomerkörperteil zur Aufnahme der Leitung kann dabei eine oder auch eine Mehrzahl von Leitungen direkt in dem Schlitz aufnehmen, wenn diese dünn genug sind, um von dem elastischen Material dicht umschlossen zu werden.

Vorzugsweise weist aber der Elastomerkörper bzw. Elastomerkörperteil zur Aufnahme der Leitung ein oder eine Mehrzahl konzentrisch angeordnete Füllelemente von vorzugsweise zylindrischer bzw. hohlzylindrischer Form auf, die mit dem Elastomerkörper verbunden, beispielsweise durch eine Sollbruchstelle oder durch Abreißstege, oder auch lose in diesen eingelegt sein können. Sie können aus dem Elastomerkörper einzeln entnommen werden, um einen der Form der Leitung angepassten Freiraum des Elastomerkörpers freizugeben. Dazu sind sie bevorzugt von dem Schlitz des Elastomerkörpers (gegebenenfalls mindestens bis zu einem evtl. in der konzentrischen Anordnung innen liegenden zylindrischen Element) durchtrennt, sodass sie genauso wie der Elastomerkörper aufklappbar sind. Durch gezielte Entnahme der konzentrisch angeordneten Elemente kann also eine Durchgangsöffnung durch den Elastomerkörper in Durchführungsrichtung erzeugt und/oder in ihrem Querschnitt an die Leitung angepasst werden.

Wenn solche Füllelemente den Elastomerkörper vollständig schließen, kann man nicht im eigentlichen Sinn von einer Öffnung des Elastomerkörpers sprechen (weil die Füllelemente ja als Teile des Elastomerkörpers bzw. Elastomerkörperteils verstanden werden). Eine Öffnung würde sich dann erst nach Entnahme zumindest eines Füllelements bilden. Bei letztlich hohlen Füllelementen, die also eine Öffnung des Elastomerkörpers begrenzen, ist dies anders. Im Übrigen sind auch Elastomerkörper bevorzugt, die an sich Öffnungen, also auch ohne Füllelemente aufweisen, natürlich wieder in Durchführungsrichtung zur Aufnahme einer Leitung. Eine solche Öffnung ist vorzugsweise durch einen Schlitz des Elastomerkörpers zugänglich.

Die Leitungsdurchführung weist bevorzugt für zumindest einen Elastomerkörper bzw. Elastomerkörperteil eine in Durchführungsrichtung sichtbare Farbmarkierung auf, die diesen kennzeichnet. Dabei ist denkbar, dass die Farbmarkierung beispielsweise eine Information über den Durchmesser oder die Art der Leitung, für deren Aufnahme der Elastomerkörper bzw. der Elastomerkörperteil geeignet ist, wiedergibt.

Zur Verteilung der Anpresskraft der Spannvorrichtung weist die Leitungsdurchführung vorzugsweise beidseitig des Elastomerkörpers bzw. der Elastomerkörperteile Pressplatten aus einem festen Material, beispielsweise Metall oder glasfaserverstärkter Kunststoff, auf. Dadurch wird sichergestellt, dass der zum Dichten notwendige Anpressdruck der Spannvorrichtung auf einen größeren Teil der Stirnfläche des Elastomerkörpers übertragen wird. In einer möglichen Ausführung ist jeweils beidseitig in Durchführungsrichtung eine Pressplatte fest mit dem Elastomerkörper verbunden. Bei der Verwendung der Pressplatten kann die Spannvorrichtung eine Kraft in Durchführungsrichtung direkt auf diese Platten ausüben, wobei die Platten, gegebenenfalls mit befestigtem Elastomerkörper, durch Formschluss mit der Spannvorrichtung in der Leitungsdurchführung gehalten werden können.

Weitere konkretere Ausführungen liegen darin, dass einerseits ein Elastomerkörper für die Aufnahme mehrerer Leitungen ausgelegt ist, also gegebenenfalls eine Mehrzahl nicht konzentrisch angeordnete Füllelemente bzw. Öffnungen aufweist, andererseits eine Leitungsdurchführung auch eine Mehrzahl Elastomerkörper bzw. Elastomerkörperteile zur Aufnahme einer oder einer Mehrzahl Leitungen aufweisen kann.

Ferner sind der Elastomerkörper bzw. der Elastomerkörperteil zur Aufnahme einer oder einer Mehrzahl Leitungen vorzugsweise bei geöffneter Spannvorrichtung entnehmbar und gegen andere Elastomerkörper austauschbar, sodass eine Leitungsdurchführung sowohl bezüglich der Anzahl, als auch bezüglich der Art und des Durchmessers der aufzunehmenden Leitungen anpassbar ist.

Bei einer günstigen Verwendung einer erfindungsgemäßen Leitungsdurchführung wird in diese außerhalb der Wand- bzw. Durchlassöffnung eine Leitung eingebracht und an dieser durch Schließen des Verschlusses der Spannvorrichtung fixiert. Besonders bei Durchführungen mit einer Vielzahl loser Elemente ist dabei vorteilhaft, dass diese vorfixiert und quasi als ein Modul in die Öffnung eingesetzt werden können, sodass beispielsweise das Herausfallen einzelner Elastomerkörper aus der Öffnung während der Montage verhindert wird.

Neben dem dichtenden Verschließen einer Öffnung mit genau einer Leitungsdurchführung gibt es auch Anwendungsfälle für eine Mehrzahl Leitungsdurchführungen nebeneinander, wobei eine Öffnung in eine Mehrzahl durch feste Wände getrennte Teilöffnungen unterteilt sein kann und diese jeweils Leitungsdurchführungen aufnehmen können oder eine zusammenhängende Öffnung für eine Mehrzahl Leitungsdurchführungen vorgesehen sein kann.

Der erste Fall liegt im Stand der Technik insbesondere dann vor, wenn Rahmen durch feste Gitterunterteilungen so aufgeteilt sind, dass sie eine Mehrzahl (jeweils zusammenhängende) Durchlassöffnungen aufweisen. Damit wird eine größere Wandöffnung mit dem Rahmen in eine Mehrzahl kleinere Durchlassöffnungen unterteilt, die jeweils mit je einer (oder auch einer Mehrzahl, s. u.) Leitungsdurchführung gemäß der vorangegangenen Beschreibung verschlossen werden können.

Der zweite Fall betrifft eine zusammenhängende Öffnung, die so groß ist, dass sie eine Mehrzahl Leitungsdurchführungen aufnehmen kann. Dabei wird auf eine zusammenhängende Öffnung abgestellt, also nicht eine Summe aus einer Mehrzahl voneinander getrennter Öffnungen. Dabei wird eine Mehrzahl Leitungsdurchführungen in einer Ebene senkrecht zur Durchführungsrichtung in der Öffnung angeordnet.

Dies betrifft insbesondere Anwendungsfälle, bei denen eine Mehrzahl Leitungsdurchführungen tatsächlich direkt aneinander angrenzend, jedenfalls nicht durch Rahmengitterwände oder andere starre Teile voneinander getrennt, eingesetzt werden. Es können zum Dichten, wenngleich nicht bevorzugt, weitere Dichtelemente verwendet werden, beispielsweise eine Dichtschnur oder/und eine elastische Innenfläche der Wand- bzw. Durchlassöffnung.

Wenn die Leitungsdurchführungen direkt aneinander grenzen, ist insbesondere bevorzugt, dass sie, wie oben beschrieben, eine Elastomerkörperdichtfläche aufweisen, die zumindest in gespanntem Zustand der Spannvorrichtung auf dem Umfang der Leitungsdurchführung senkrecht zur Durchführungsrichtung außen liegt, um sie gegeneinander zu dichten.

Dabei soll die außen liegende Elastomerkörperdichtfläche einer Leitungsdurchführung mindestens 50 % des Umfangs in der Ebene senkrecht zur Durchführungsrichtung einnehmen, so dass eine Leitungsdurchführung eine Dichtfläche zu benachbarten Leitungsdurchführungen in mindestens zwei Richtungen aufweist und an den verbleibenden Seiten von entsprechenden Dichtflächen weiterer benachbarter Leitungsdurchführungen gedichtet wird.

Der Umriss der Leitungsdurchführungen ist vorzugsweise so geformt, dass sie sich flächenfüllend anordnen lassen. Bevorzugt weisen sie jeweils eine Umrissform in Form eines Rechtecks oder eines gleichmäßigen Sechsecks auf. Die Wand- bzw. Durchlassöffnung wird dann mit einer Mehrzahl Leitungsdurchführungen verschlossen, indem die Durchführungen in einer Ebene senkrecht zur Durchführungsrichtung innehalb der Öffnung angeordnet werden. Dabei bildet die Querschnittsfläche der Leitungsdurchführungen senkrecht zur Durchführungsrichtung eine Teilfläche der Querschnittsfläche der zusammenhängenden Wand- bzw. Durchlassöffnung. Bei dieser Ausführung können die Elastomerkörper der Leitungsdurchführungen jeweils mit ihrer Spannvorrichtung in Durchlassrichtung individuell verpresst werden, und durch deren Ausdehnung senkrecht dazu werden benachbarte Leitungsdurchführungen sowohl gegenseitig, vorzugsweise durch die außen liegenden Elastomerkörper dichtflächen, gedichtet und gegen die Laibung der Wand- bzw. Durchlassöffnung verspannt und damit befestigt.

Die Ausdehnung senkrecht zur Durchführungsrichtung beim Spannen der Spannvorrichtung ermöglicht, eine einzelne Reihe von Leitungsdurchführungen innerhalb der Wand- bzw. Durchlassöffnung zu befestigen, sobald die Reihe von einer Wand zu einer gegenüberliegenden Wand der Öffnung reicht.

Weiterhin ist denkbar, wenngleich nicht bevorzugt, dass die erfindungsgemäßen Leitungsdurchführungen gemeinsam mit weiteren Durchführungen ohne Spannvorrichtung eingesetzt werden, wobei in diesem Fall mindestens eine erfindungsgemäße Leitungsdurchführung in jeder Reihe enthalten sein sollte, um diese in der Wand- bzw. Durchlassöffnung zu befestigen. Die Gesamtquerschnittsfläche der erfindungsgemäßen Durchführungen in einer Öffnung kann also geringer als deren Querschnittsfläche sein, wobei in dieser Reihenfolge zunehmend bevorzugt mindestens 2, 3 oder 4 erfindungsgemäße Leitungsdurchführungen pro Öffnung eingesetzt werden. Für eine gleichmäßige Druckverteilung bei der Abdichtung sind in dieser Reihenfolge zunehmend bevorzugt mehr als 20 %. 25 % oder 50 % der in einer Öffnung verwendeten Leitungsdurchführungen erfindungsgemäß. Zwischenräume, die nicht durch die Ausdehnung der Leitungsdurchführungen beim Verpressen überbrückbar sind, können mit Füllstücken, vorzugsweise aus Elastomeren, belegt werden.

Jede erfindungsgemäße Leitungsdurchführung kann bereits außerhalb der Öffnung eine Leitung aufnehmen und an dieser durch Schließen des Verschlusses der Spannvorrichtung vorfixiert wird. Besonders bei Durchführungen mit einer Mehrzahl Leitungen und einer Mehrzahl Leitungsdurchführungen ist es von Vorteil, dass so die dichtenden Elastomerkörper relativ zu den Leitungen individuell vorfixiert werden können. Ferner können sogar einzelne aus der Mehrzahl Leitungsdurchführungen gelöst werden, um beispielsweise eine zusätzliche Leitung aufzunehmen oder eine bestehende Leitung auszutauschen, ohne weitere Leitungsabdichtungen zu öffnen oder sogar einen Großteil der den dichtenden Verschluss bildenden Leitungsdurchführungen innerhalb der Wand- bzw. Durchlassöffnung abbauen oder neu aufbauen zu müssen.

Im Folgenden wird die Erfindung anhand von Ausführungsbeispielen näher erläutert, wobei die dabei offenbarten Merkmale auch in anderen Kombinationen erfindungswesentlich sein können und sich, wie bereits erwähnt, implizit auf alle Kategorien der Erfindung beziehen.

### Im Folgenden zeigt:

- Figur 1: eine Draufsicht und eine Seitenansicht einer erfindungsgemäßen Leitungsdurchführung,
- Figur 2: eine Draufsicht und eine Seitenansicht eines erfindungsgemäßen Elastomerkörperteils mit daran befestigten Pressplatten,
- Figur 3: eine Draufsicht und eine Seitenansicht eines Rahmens mit vier Durchlassöffnungen zur Aufnahme je einer erfindungsgemäßen Leitungsdurchführung und
- Figur 4: eine Draufsicht und eine Seitenansicht von vier erfindungsgemäßen Leitungsdurchführungen in einer zusammenhängenden Durchlassöffnung eines Rahmens.

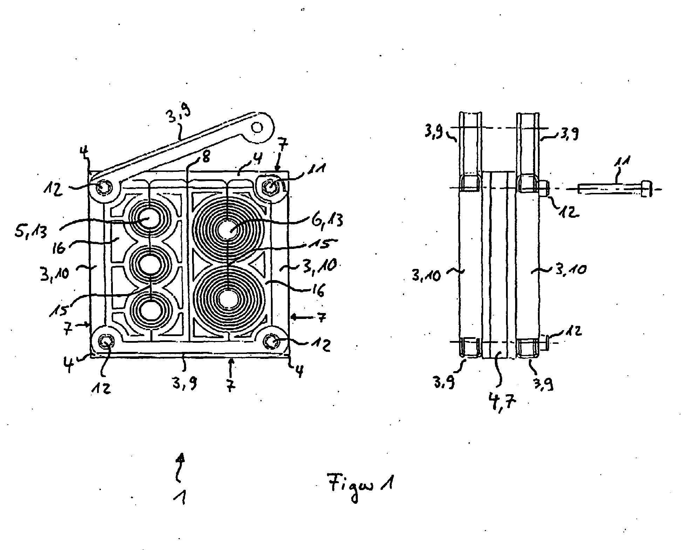

Figur 1 zeigt links eine Draufsicht in Durchführungsrichtung auf eine erfindungsgemäße quadratische Leitungsdurchführung 1 zur Aufnahme von fünf Leitungen mit geöffneter Spannvorrichtung 3. Rechts ist eine Seitenansicht in einer Richtung senkrecht dazu dargestellt.

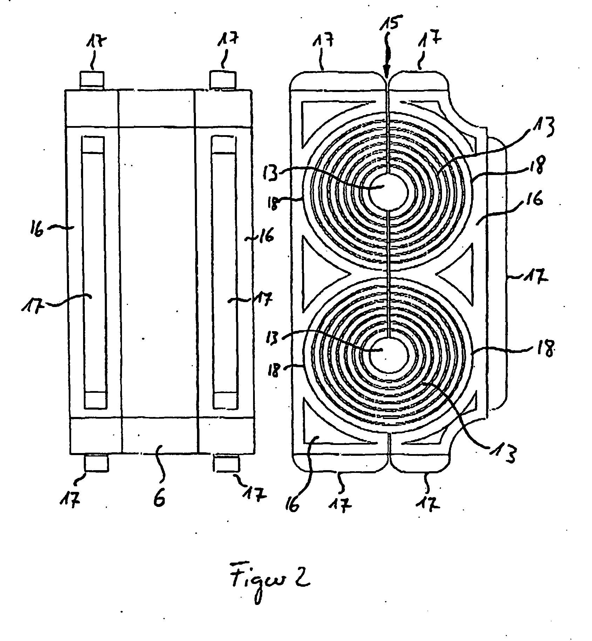

Der Elastomerkörper ist in drei Elastomerkörperteile 4, 5, 6 unterteilt, von denen ein erster Elastomerkörperteil 4, der den zweiten 5 und dritten 6 umschließt, eine auf dem gesamten Umfang der Leitungsdurchführung 1 senkrecht zur Durchführungsrichtung auch in nicht gespanntem Zustand der Spannvorrichtung 3 außen liegende Dichtfläche 7 bildet. Weiterhin ist er, in der Figur 1 oben, mit einem Schlitz 8 zum Öffnen senkrecht zur Durchführungsrichtung versehen. Er ist in Figur 2 zum Vergleich weggelassen.

Der zweite und dritte Elastomerkörperteil 5, 6 sind zur Aufnahme von drei bzw. zwei Leitungen ausgelegt. Die Elastomerkörperteile 5, 6 zur Leitungsaufnahme können beispielsweise zum Öffnen oder Anpassen der für die Leitungsdurchführung vorgesehenen Bereiche, zum Austausch oder zum Einlegen einer Leitung aus der Leitungsdurchführung 1 entnommen werden. Die Elastomerkörperteile 5, 6 zur Leitungsaufnahme werden weiter unten anhand von Figur 2 detaillierter beschrieben.

Die Spannvorrichtung 3 weist auf beiden Seiten in Durchführungsrichtung je zwei, in Figur 1 oben und unten liegende U-Profile 9 aus Stahl und je zwei vertikale Verbindungsstücke 10 an der linken und rechten Seite der Leitungsdurchführung 1 aus glasfaserverstärktem Kunststoff auf mit jeweils an Ihren Enden einer Vorrichtung zur Aufnahme einer Schraube 11, 12 als Spannbolzen.

Das Ausführungsbeispiel besitzt eine Spannvorrichtung 3 mit vier Schrauben 11, 12 als Spannbolzen, von denen z. B. eine 11 der gegenüber dem Schlitz 8 des ersten Elastomerkörperteils 4 nächstliegenden als Verschluss und eine benachbarte 12 als Gelenk zum Öffnen der Leitungsdurchführung 1 und Herausnehmen der Elastomerkörperteile 5, 6 zur Leitungsaufnahme dienen kann. Die Schrauben sind aber grundsätzlich identisch. In der Darstellung ist der Verschluss 11 zum öffnen der Spannvorrichtung 3 aus dieser hervorgezogen.

Die Seitenansicht rechts in Figur 1 verdeutlicht den Aufbau der Leitungsdurchführung 1 in Durchführungsrichtung, bezüglich der die Spannvorrichtung 3 beidseitig außen liegt Dazwischen sind die Elastomerkörperteile 4, 5, 6 eingeschlossen, die beim Spannen der Spannvorrichtung 3 in Durchführungsrichtung gestaucht werden, wie sich aus der Beschreibung der Figur 2 für die Elastomerkörpertelle 5, 6 noch näher ergibt, und sich folglich senkrecht dazu ausdehnen. Dadurch werden sowohl die Leitungen, Schlitze 8, 15 und Grenzflächen zwischen den Elastomerkörperteilen 4, 5, 6 gedichtet, als auch der Umfang der Leitungsdurchführung 1 senkrecht zur Durchführungsrichtung vergrößert, indem der erste Elastomerkörperteil 4 sich in diese senkrechte Richtungen nach außen hin ausdehnt. Er dichtet dann gegebenenfalls gegen angrenzende Flächen der Wand- bzw. Durchlassöffnung oder benachbarte Leitungsdurchführungen 1.

Figur 2 zeigt in der rechten Hälfte eine Draufsicht auf den Elastomerkörperteil 6 zur Aufnahme von zwei Leitungen in Durchführungsrichtung, der aus der Leitungsdurchführung 1 entnommen ist; links ist eine Seitenansicht in einer Richtung senkrecht dazu dargestellt. Der Elastomerkörperteil 5 zur Aufnahme von drei Leitungen ist analog aufgebaut, so dass die folgende Beschreibung auch für diesen und prinzipiell auch für weitere Elastomerkörperteile mit anderen Leitungskonfigurationen gilt.

Der Elastomerkörperteil 6 weist konzentrisch angeordnete zylindrische bzw. hohlzylindrische Füllelemente 13 auf, die zur Aufnahme der Leitungen teilweise oder vollständig, je nach Leitungsdurchmesser, entnommen werden können. Hierzu sind die hohlzylindrischen Füllelemente 13 teils ganz und teils zur Hälfte durch einen Schlitz 15 getrennt, so dass ein innen liegendes Füllelement 13 auch ohne ein weiter außen liegendes entnommen werden kann, indem der Elastomerkörperteil 5, 6 an seinem Schlitz 15 aufgeklappt wird. Der Schlitz 15 des Elastomerkörperteils 5, 6 ist nicht durchgängig, so dass dieser in zwei Hälften aufgeklappt werden kann und dabei zusammengehalten wird. Alternativ können auch einfache zylindrische Blindstopfen (nicht gezeigt) vorgesehen sein.

Auf den Stirnseiten in Durchführungsrichtung sind jeweils zwei Pressplatten 16 aus glasfaserverstärktem Kunststoff befestigt, die den Anpressdruck der Spannvorrichtung 3 auf den Elastomerkörperteil 6 verteilen. Pro Elastomerkörperteil 5, 6 sind auf jeder Seite in Durchlassrichtung jeweils zwei Pressplatten 16 angebracht, so dass dieser trotz der an ihm befestigten Pressplatten 16 weiterhin aufklappbar bleibt. Die Pressplatten 16 des Elastomerkörperteils 6 zur Aufnahme von zwei Leitungen sind blau, die zur Aufnahme von drei Leitungen sind rot gefärbt, sodass die Farbmarkierungen sich hier auf den Maximaldurchmesser einer zum Einlegen geeigneten Leitung beziehen.

An ihren Seiten zur Spannvorrichtung 3 hin weisen die Pressplatten 16 ein Außenprofil 17 auf, welches aus der Durchführungsrichtung betrachtet hinter Teile der Spannvorrichtung 3 greift. Diese Profilpassung der Spannvorrichtung 3 mit den Pressplatten 16 im Bereich des Außenprofils 17 ist in Figur 1 dargestellt. Sie verhindert damit durch Formschluss ein Herausziehen der Pressplatten 16 zusammen mit dem daran befestigten Elastomerkörperteil 5, 6 aus der Leitungsdurchführung 1.

An ihrer Seite zum Schlitz 15 der Elastomerkörperteile 5, 6 hin weisen die Pressplatten 16 jeweils halbkreisförmige Aussparungen 18 auf mit einem Radius, der geringfügig größer als der größte vorgesehene Durchmesser der aufzunehmenden Leitung ist. Dadurch wird sichergestellt, dass die Leitungen durch den Elastomerkörperteil 5, 6 gedichtet werden können.

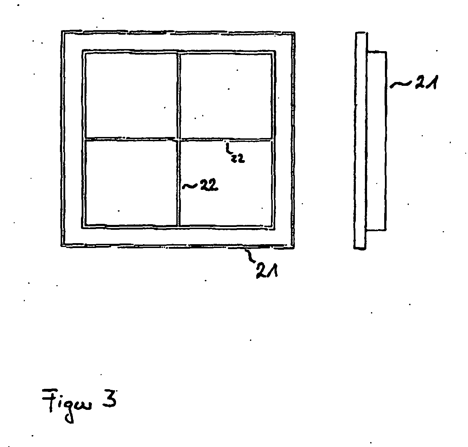

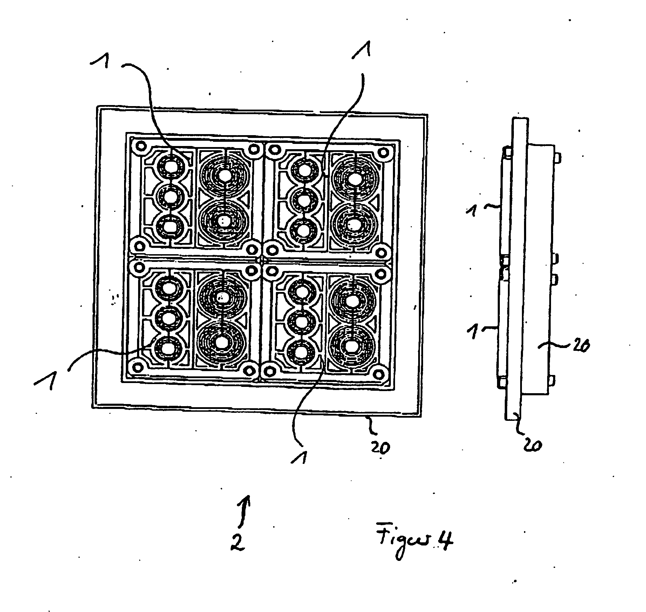

Figur 3 zeigt eine Draufsicht und eine Seitenansicht eines Rahmens 21, der mit gitterartigen Stegen 22 in vier Durchlassöffnungen zur Aufnahme jeweils einer Leitungsdurchführungen 1 unterteilt ist. Auch Unterteilungen einer Wandöffnung mittels eines Rahmens in eine andere Mehrzahl von Durchlassöffnungen sind denkbar, ebenso wie einzelne Wandöffnungen ohne Rahmen zur Aufnahme jeweils einer Leitungsdurchführung 1. Dabei sind auch andere Umrissformen der Öffnungen bzw. der dazu passenden Leitungsdurchführungen denkbar, wobei insbesondere ein Kreis vor allem für Kernbohrungen oder ein Rechteck oder ein regelmäßiges Sechseck als Umrissform vor allem für Beispiele nach Figur 3 oder Figur 4 bevorzugt sind.

Ein weiteres Ausführungsbeispiel zeigt Figur 4, das sich von dem Ausführungsbeispiel in Figur 3 durch das Fehlen der Stege 22 des Rahmens 20 unterscheidet. Dargestellt ist eine Draufsicht und eine Seitenansicht einer Anordnung 2 vier baugleicher erfindungsgemäßer Leitungsdurchführungen 1 in einer zusammenhängenden Durchlassöffnung des Rahmen 20 aus Metall, der zum Abschweißen oder zusammen mit einem Dichtungsband zum Anschrauben in einer Öffnung einer Wand ausgelegt ist. Hier sind die Leitungsdurchführungen 1 unmittelbar benachbart, also insbesondere ohne Trennwände, gegeneinander dichtend angeordnet.

In diesem Ausführungsbeispiel weisen alle Leitungsdurchführungen 1 eine Spannvorrichtung 3 auf, es könnten im Sinne der Erfindung jedoch auch ein oder zwei der vier Leitungsdurchführungen 1 ohne eigene Spannvorrichtung 3 eingesetzt werden. Weiterhin ist die Auswahl von vier baugleichen Leitungsdurchführungen 1 hier frei getroffen, es sind ebenso Konfigurationen mit Leitungsdurchführungen 1 zur Aufnahme sowohl unterschiedlicher Leitungsanzahl als auch unterschiedlicher Leitungsquerschnitte vorgesehen.

Im gespannten Zustand aller Leitungsdurchführungen 1 dichtet jede einzelne an ihren vier Seiten senkrecht zur Durchführungsrichtung mit der außenliegenden Elastomerkörperdichtfläche 7 jeweils unmittelbar an die benachbarten Leitungsdurchführungen und an den Rahmen 20. Durch Lösen der Spannvorrichtung 3 einer einzelnen Leitungsdurchführung 1 kann diese aus der Anordnung 2 entnommen werden, ohne dass die verbleibenden Leitungsdurchführungen 1 in ihrer Dichtwirkung bezüglich eventuell aufgenommener Leitungen oder ihrer Dichtung und Befestigung bezüglich dem Rahmen 20 beeinträchtigt werden. Dies ermöglicht auf effiziente Art und Weise einen Austausch oder ein nachträgliches Hinzufügen einer Leitung in einer bestehenden Leitungsdurchführung.

Ferner können im Sinne der Erfindung zusätzliche Füllstücke, vorzugsweise aus Elastomeren, zusätzlich zu einer oder einer Mehrzahl von Leitungsdurchführungen zum Füllen von Zwischenräumen eingesetzt werden, falls die Wandöffnung größer als die eingesetzten Leitungsdurchführungen 1 ist.

Ferner ist auch eine Ausführung, die nicht als Figur gezeigt ist, bevorzugt, bei der der Rahmen 21 mit Stegen 22 entsprechend Figur 3 in eine Mehrzahl Durchlassöffnungen unterteilt ist und bei der entsprechend dem in Figur 4 dargestellten Ausfahrungsbeispiel zumindest in einer dieser Durchlassöffnungen eine Mehrzahl Leitungsdurchführungen 1 eingesetzt werden.

## Patentansprüche

1. Leitungsdurchführung (1) zum Aufbauen eines dichtenden Verschlusses einer Öffnung in einer Wand mit
einem Elastomerkörper (4, 5, 6) zum Aufnehmen einer Leitung und
einer Spannvorrichtung (3) zum Spannen des Elastomerkörpers (4, 5, 6) und Dichten der Leitung mit einem Verschluss (11) zum Öffnen der Spannvorrichtung (3) für das Einlegen oder Entnehmen der Leitung und Wiederverschließen, welche Spannvorrichtung (3) in geschlossenem Zustand den Elastomerkörper (4, 5, 6) senkrecht zur Durchführungsrichtung umschließt,
**dadurch gekennzeichnet, dass** die Spannvorrichtung (3) den Elastomerkörper (4, 5, 6) in Durchführungsrichtung spannt.

2. Leitungsdurchführung (1) nach Anspruch 1, bei der der Verschluss (11) einen Spannbolzen zum Spannen der Spannvorrichtung (3) aufweist.

3. Leitungsdurchführung (1) nach Anspruch 1 oder 2, die ein Gelenk (12) zum Öffnen der Spannvorrichtung (3) aufweist, das einen Spannbolzen zum Spannen der Spannvorrichtung (3) als Gelenkachse aufweist.

4. Leitungsdurchführung (1) nach einem der vorstehenden Ansprüche, die eine Elastomerkörperdichtfläche (7) aufweist, die in gespanntem Zustand der Spannvorrichtung (3) auf dem Umfang der Leitungsdurchführung (1) senkrecht zur Durchführungsrichtung außen liegt.

5. Leitungsdurchführung (1) nach einem der vorstehenden Ansprüche, bei der der Elastomerkörper (4, 5, 6) mehrteilig ist.

6. Leitungsdurchführung (1) nach einem der vorstehenden Ansprüche, bei der der Elastomerkörper oder ein Elastomerkörperteil (4, 5, 6) in Durchführungsrichtung so eingeschlitzt ist, dass er zum Einlegen oder Entnehmen der Leitung geöffnet werden kann und dabei zusammenhängend bleibt.

7. Leitungsdurchführung (1) nach einem der vorstehenden Ansprüche, bei der der Elastomerkörper oder ein Elastomerkörperteil (4, 5, 6) ein oder eine Mehrzahl konzentrisch angeordnete, axial in Durchführungsrichtung angeordnete zylindrische Füllelemente (13) aufweist, die einzeln lösbar sind, um eine Öffnung für eine Leitung freizugeben oder zu vergrößern.

8. Leitungsdurchführung (1) nach einem der vorstehenden Ansprüche, bei der der Elastomerkörper oder ein Elastomerkörperteil (4, 5, 6) eine Öffnung in Durchführungsrichtung für eine Leitung aufweist.

9. Leitungsdurchführung (1) nach einem der vorstehenden Ansprüche, bei der die Leitungsdurchführung (1) eine in Durchführungsrichtung sichtbare Farbmarkierung aufweist, die eine Information über ihre Eigenschaften wiedergibt.

10. Leitungsdurchführung (1) nach einem der vorstehenden Ansprüche, die beidseitig in Durchführungsrichtung eine Pressplatte (16) zur Verteilung der Anpresskraft der Spannvorrichtung (3) auf den Elastomerkörper oder einen Elastomerkörperteil (4, 5, 6) aufweist.

11. Leitungsdurchführung (1) nach Anspruch 10, bei der die Pressplatten (16) fest mit dem Elastomerkörper oder einem Elastomerkörperteil (4, 5, 6) verbunden sind.

12. Leitungsdurchführungssystem (2) mit einer Mehrzahl Leitungsdurchführungen (1) nach einem der vorstehenden Ansprüche und mit
einem Rahmen (20) zur dichten Befestigung in der Wandöffnung und mit einer zusammenhängenden Durchlassöffnung für die Leitung in dem Rahmen (20),
wobei die Leitungsdurchführungen (1) jeweils eine solche Querschnittsfläche senkrecht zur Durchführungsrichtung im Verhältnis zu der Querschnittsfläche der Durchlassöffnung des Rahmens (20) aufweisen, dass sie gemeinsam zum Dichten in die Durchlassöffnung eingesetzt werden können.

13. Leitungsdurchführungssystem (2) mit einer Mehrzahl Leitungsdurchführungen (1) nach einem der vorstehenden Ansprüche und mit
einem Rahmen (21) zur dichten Befestigung in der Wandöffnung und mit einem Rahmengitter (22) zur Unterteilung jeweils zusammenhängender Durchlassöffnungen in dem Rahmen (21),
wobei die Leitungsdurchführungen (1) jeweils eine solche Querschnittsfläche senkrecht zur Durchführungsrichtung im Verhältnis zu der Querschnittsfläche der Durchlassöffnung des Rahmens (21) aufweisen, dass jeweils mindestens eine Leitungsdurchführung (1) in jede der unterteilten Durchlassöffnungen eingesetzt werden kann.

14. Verfahren zum Aufbauen eines dichtenden Verschlusses einer Wandöffnung für eine Leitung mit einer Leitungsdurchführung (1) nach einem der Ansprüche 1 - 11, auch unter Verwendung eines Leitungsdurchführungssystems (2) nach Anspruch 12 oder 13, bei dem
die Leitungsdurchführung (1), die die Leitung aufnimmt, mit dem Verschluss (11) der Spannvorrichtung (3) geöffnet wird, um außerhalb der Wandöffnung die Leitung in den Elastomerkörper (4, 5, 6) einzulegen und
die Leitungsdurchführung (1) mit dem Verschluss (11) wieder verschlossen wird, um sie an der Leitung zu fixieren und
dann die Leitungsdurchführung (1) in die Wandöffnung eingesetzt wird.

15. Verfahren zum Aufbau eines dichtenden Verschlusses einer zusammenhängenden Öffnung für eine Leitung in einer Wand unter Verwendung einer Mehrzahl Leitungsdurchführungen (1) nach einem der Ansprüche 1-11, auch unter Verwendung eines Leitungsdurchführungssystems (2) nach Anspruch 12, bei dem
die Mehrzahl Leitungsdurchführungen (1)
jeweils eine Leitung in einem Elastomerkörper (4, 5, 6) aufnehmen können, gemeinsam in die Wandöffnung eingesetzt werden, und
jeweils mit der eigenen Spannvorrichtung (3) individuell gespannt werden.

16. Verwendung einer Leitungsdurchführung (1) nach einem der Ansprüche 1-11 oder eines Leitungsdurchführungssystems (2) nach Anspruch 12 oder 13 für einen dichtenden Verschluss einer Wandöffnung, bei der die Wand ausgewählt ist aus einer Menge umfassend Wände von Gebäuden, Luft-, Wasser- und Landfahrzeugen, einer Maschine und einer technischen Anlage.

## Claims

1. A conduit duct (1) for setting up a sealing of an opening in a wall, having an elastomer body (4, 5, 6) for receiving a conduit and
a tensioning device (3) for tensioning said elastomer body (4, 5, 6) and sealing of said conduit, having a closure (11) for opening said tensioning device (3) in order to insert or take out said conduit and for closing again, said tensioning device (3) enclosing, when being closed, said elastomer body (4, 5, 6) perpendicular to a duct direction,
**characterized in that**, said tensioning device (3) is tensioning said elastomer body (4, 5, 6) in said duct direction.

2. The conduit duct (1) according to claim 1, wherein said closure (11) comprises a tensioning bolt for tensioning said tensioning device (3).

3. The conduit duct (1) according to claim 1 or 2, which comprises an articulation (12) for opening said tensioning device (3), which articulation comprises a tensioning bolt for tensioning said tensioning device (3) as articulated axle.

4. The conduit duct (1) according to one of the previous claims, which comprises an elastomer body sealing surface (7) lying, when said tensioning device (3) is tensioned, outside on the circumference of said conduit duct (1) perpendicular to said duct direction.

5. The conduit duct (1) according to one of the preceding claims, wherein said elastomer body (4, 5, 6) is multi-part.

6. The conduit duct (1) according to one of the preceding claims, wherein said elastomer body or an elastomer body part (4, 5, 6) is slit in said duct direction in such a way that in can be opened for inserting or taking out said conduit, and remains connected therein.

7. The conduit duct (1) according to one of the preceding claims, wherein said elastomer body or an elastomer body part (4, 5, 6) comprises one or a plurality of concentrically arranged cylindrical filling elements (13) axially arranged in said duct direction, which are separable individually for opening or enlarging an opening for a conduit.

8. The conduit duct (1) according to one of the preceding claims, wherein said elastomer body or an elastomer body part (4, 5, 6) comprises an opening for said conduit in said duct direction.

9. The conduit duct (1) according to one of the preceding claims, wherein said conduit duct (1) has a colour marking being visible in said duct direction, which represents information on its properties.

10. The conduit duct (1) according to one of the preceding claims, which comprises a squeezing plate (16) on both sides in said duct direction, respectively, for distributing the pressing force of said tensioning device (3) onto said elastomer body or an elastomer body part (4, 5, 6)

11. The conduit duct (1) according to claim 10, wherein said squeezing plates (16) are firmly attached to said elastomer body or said elastomer body part (4, 5, 6).

12. A conduit duct system (2) having a plurality of conduit ducts (1) according to one of the preceding claims and having
a frame (20) for a sealed mounting in said wall opening and having a continuous through-hole for said conduit in said frame (20).
wherein said conduit ducts (1) have each such a cross-sectional area perpendicular to said duct direction in relation to a cross-sectional area of said through-hole of said frame (20) that they can be inserted together into said through-hole for sealing.

13. A conduit duct system (2) having a plurality of conduit ducts (1) according to one of the preceding claims and having
a frame (21) for a sealed mounting in the wall opening and having a frame lattice (22) for partitioning through-holes in said frame (21), each through-hole being continuous,
wherein said conduit ducts (1) each comprise such a cross-sectional area perpendicular to said duct direction in relation to a cross-sectional area of said through-hole of said frame (21) that at least one respective conduit duct (1) can be inserted into each partitioned through-hole.

14. A method for setting up a sealing of a wall opening for a conduit by a conduit duct (1) according to one of claims 1 - 11, in particular by using a conduit duct system (2) according to claim 12 or 13, wherein
said conduit duct (1), which receives said conduit, is opened with a closure (11) of said tensioning device (3) for inserting said conduit outside said wall opening into said elastomer body (4, 5, 6) and
said conduit duct (1) is closed again by said closure (11) for fixing it to said conduit and
said conduit duct (1) is then inserted into said wall opening.

15. A method for setting up a sealing of a continuous opening for a conduit in a wall using a plurality of conduit ducts (1) according to one of claims 1 - 11, in particular by using a conduit duct system (2) according to claim 12, wherein said plurality of conduit ducts (1)
can each receive a duct in an elastomer body (4, 5, 6),
are inserted together into said wall opening, and
are tensioned individually by their own tensioning device (3), respectively.

16. A use of a conduit duct (1) according to one of claims 1 - 11 or of a conduit duct system (2) according to claim 12 or 13 for a sealing of a wall opening,
wherein said wall is chosen from a set comprising walls of buildings, aircrafts, water-crafts and land crafts, of a machine and a technical plant.

## Revendications

1. Passage de conduite (1) pour la construction d'un dispositif de fermeture étanche d'une ouverture murale, avec
un corps élastomère (4, 5, 6) pour l'admission d'une conduite, et
un dispositif de serrage (3) pour le serrage du corps élastomère (4, 5, 6) et l'étanchéité de la conduite avec un dispositif de fermeture (11) pour l'ouverture du dispositif de serrage (3) en vue de l'insertion ou du retrait de la conduite et pour la refermeture, le dispositif de serrage (3) enserrant à l'état fermé le corps élastomère (4, 5, 6), verticalement au sens de passage,
**caractérisé en ce que** le dispositif de serrage (3) serre le corps élastomère (4, 5, 6) dans le sens de passage.

2. Passage de conduite (1) selon la revendication 1, dans lequel le dispositif de fermeture (11) comporte un boulon de serrage pour le serrage du dispositif de serrage (3).

3. Passage de conduite (1) selon l'une des revendications 1 ou 2, comportant une articulation (12) pour l'ouverture du dispositif de serrage (3), qui comporte un boulon de serrage pour le serrage du dispositif de serrage (3) en tant qu'axe d'articulation.

4. Passage de conduite (1) selon l'une des revendications précédentes, comportant une surface d'étanchéité de corps élastomère (7), qui à l'état serré du dispositif de serrage (3) s'applique extérieurement sur le pourtour du passage de conduite (1), verticalement au sens de passage.

5. Passage de conduite (1) selon l'une des revendications précédentes, dans lequel le corps élastomère (4, 5, 6) est constitué de plusieurs parties.

6. Passage de conduite (1) selon l'une des revendications précédentes, dans lequel le corps élastomère ou une partie de corps élastomère (4, 5, 6) est fendu(e) de telle manière dans le sens de passage, qu'il/elle peut être ouvert(e) pour l'insertion ou le retrait de la conduite, tout en restant solidaire.

7. Passage de conduite (1) selon l'une des revendications précédentes, dans lequel le corps élastomère ou une partie du corps élastomère (4, 5, 6) comporte un ou plusieurs éléments de garnissage (13) cylindriques, disposés concentriquement et axialement au sens de passage, qui peuvent être détachés individuellement pour dégager ou agrandir une ouverture destinée à une conduite.

8. Passage de conduite (1) selon l'une des revendications précédentes, dans lequel le corps élastomère ou une partie du corps élastomère (4, 5, 6) comporte une ouverture au sens de passage, pour une conduite.

9. Passage de conduite (1) selon l'une des revendications précédentes, dans lequel le passage de conduite (1) comporte une marque de couleur visible au sens de passage, qui fournit des informations sur ses caractéristiques.

10. Passage de conduite (1) selon l'une des revendications précédentes, comportant une plaque de pressage (16), des deux côtés dans le sens de passage, pour la répartition de la force de pressage du dispositif de serrage (3) sur le corps élastomère ou une partie du corps élastomère (4, 5, 6).

11. Passage de conduite (1) selon la revendication 10, dans lequel les plaques de pressage (16) sont reliées solidement avec le corps élastomère ou une pièce du corps élastomère (4, 5, 6).

12. Système de passages de conduites (2) avec une pluralité de passages de conduites (1) selon l'une des revendications précédentes, et avec un cadre (20) pour la fixation étanche dans l'ouverture murale et avec une ouverture de passage en continu pour la conduite dans le cadre (20),
dans lequel les passages de conduites (1) comportent chacune une telle aire de la section verticale au sens de passage par rapport à l'aire de la section de l'ouverture de passage du cadre (20), qu'elles peuvent être insérées conjointement dans l'ouverture de passage pour l'étanchéité.

13. Système de passages de conduites (2) avec une pluralité de passages de conduites (1) selon l'une des revendications précédentes, et avec
un cadre (21) pour la fixation étanche dans l'ouverture murale et avec une grille de cadre (22) pour la division d'ouvertures de passage en continu dans le cadre (21),
dans lequel les passages de conduites (1) comportent chacune une telle aire de la section verticale au sens de passage par rapport à l'aire de la section de l'ouverture de passage du cadre (21), qu'au moins un passage de conduite (1) peut respectivement être inséré dans chacune des ouvertures de passage divisées.

14. Procédé pour la construction d'un dispositif de fermeture étanche dans une ouverture murale, pour une conduite, avec un passage de conduite (1) selon l'une des revendications 1 à 11, en particulier utilisant un système de passages de conduites (2) selon l'une des revendications 12 ou 13, dans lequel
le passage de conduite (1) recevant la conduite est ouvert à l'aide du dispositif de fermeture (11) du dispositif de serrage (3), pour insérer la conduite dans le corps élastomère (4, 5, 6) à l'extérieur de l'ouverture murale, et
le passage de conduite (1) est refermé à l'aide du dispositif de fermeture (11), pour le fixer avec la conduite, et
le passage de conduite (1) est ensuite inséré dans l'ouverture murale.

15. Procédé pour la construction d'un dispositif de fermeture étanche d'une ouverture en continu , pour une conduite dans un mur, utilisant une pluralité de passages de conduites (1) selon l'une des revendications 1 à 11, en particulier utilisant un système de passages de conduites (2) selon la revendication 12,
dans lequel
la pluralité de passages de conduites (1)
peuvent chacune recevoir une conduite dans un corps élastomère (4, 5, 6), sont insérés conjointement dans l'ouverture murale, et
sont serrés individuellement à l'aide du dispositif de serrage (3).

16. Utilisation d'un passage de conduite (1) selon l'une des revendications 1 à 11, ou d'un système de passages de conduites (2) selon l'une des revendications 12 ou 13, pour un dispositif de fermeture étanche dans une ouverture murale,
dans lequel le mur est sélectionné parmi une quantité comprenant des murs de bâtiments, des parois d'avions, de navires et de véhicules terrestres, d'une machine et d'une installation technique.
